# EUROPÄISCHE PATENTANMELDUNG

(11) **EP 0 619 988 A1**
(43) Veröffentlichungstag der Anmeldung: **19.10.1994**
(21) Anmeldenummer: 94103950.5
(22) Anmeldetag: 15.03.1994
(51) Int. Cl.: A61C 13/265

(54) **Geschiebe zum Befestigen von Zahnprothesen und Verfahren zu dessen Herstellung**

(30) Priorität: 16.03.1993 DE 4308278
(71) Anmelder: Krassmann, Hans, D-27299 Etelsen (DE)
(72) Erfinder: Krassmann, Hans, D-27299 Etelsen (DE)
(74) Vertreter: Eisenführ, Speiser & Partner

(57) **Zusammenfassung**

Es wird ein Geschiebe mit einem an einem Retentionselement (5) befestigbaren ersten Geschiebeteil (1) und einem darauf aufschiebbaren zweiten Geschiebeteil (3), mit von okklusal nach zervikal verlaufenden, ineinander greifenden Führungselementen (7,9) zwischen den Geschiebeteilen sowie ein Verfahren zu dessen Herstellung angegeben, bei dem zur Erleichterung des Aktivierens durch den Zahnarzt mindestens eines der Führungselemente an einem Geschiebeteil lösbar befestigt ist.

## Beschreibung

Die Erfindung betrifft ein Geschiebe mit einem an einem Retentionselement befestigbaren ersten Geschiebeteil und einem darauf aufschiebbaren zweiten Geschiebeteil, mit von okklusal nach zervikal verlaufenden, ineinandergreifenden Führungselementen zwischen den Geschiebeteilen.

Die Erfindung betrifft ferner ein Verfahren zur Herstellung eines solchen Geschiebes, bei dem das zweite Geschiebeteil am ersten Geschiebeteil aus Wachs modelliert wird, das Wachsmodell abgenommen und mit Einbettmasse umgeben wird und nach dem Aushärten der Einbettmasse das Wachs entfernt und die entstandene Negativform mit Gußmaterial ausgegossen und anschließend vom Gußteil entfernt wird.

Ein solches Geschiebe ist aus der früher angemeldeten aber nachveröffentlichten DE 41 42 787 bekannt. Bei diesem bekannten Geschiebe sind zu dessen Aktivierung am Sekundärteil integral angeformte Stifte zu verbiegen, um so einen nachlassenden Reibschluß zwischen Primärteil und Sekundärteil zu beseitigen. Durch wiederholtes Aktivieren dieser bekannten Geschiebe kommt es im Bereich der Stifte zu Materialermüdungen, die die Federkraft des Materials nachteilig beeinflussen und so eine Aktivierung in immer kürzeren Zeitabständen erforderlich machen. Außerdem wird bei diesem bekannten Geschiebe beim Aktivieren stets nur ein punktförmiger Reibschluß zwischen Primärteil und Sekundärteil hergestellt.

Aufgabe der Erfindung ist es, ein Geschiebe der eingangs genannten Art derart weiterzubilden, daß das Geschiebe durch den Zahnarzt leicht aktiviert werden kann, ohne daß es dadurch zu Materialermüdungen kommt.

Diese Aufgabe wird bei dem Geschiebe der eingangs genannten Art erfindungsgemäß dadurch gelöst, daß mindestens eines der Führungselemente an einem Geschiebeteil lösbar befestigt.

Eine weitere Aufgabe der Erfindung ist es, ein Verfahren der eingangs genannten Art derart weiterzubilden, daß es eine einfache und präzise Herstellung eines erfindungsgemäßen Geschiebes gestattet.

Zur Lösung dieser Aufgabe wird bei dem Verfahren zur Herstellung des erfindungsgemäßen Geschiebes das zweite Geschiebeteil am ersten Geschiebeteil aus Wachs modelliert. So dann wird das Wachsmodell abgenommen und mit Einbettmasse umgeben und nach dem Aushärten der Einbettmasse das Wachs entfernt und die entstandene Negativform mit Gußmaterial ausgegossen. Anschließend wird die Negativform entfernt. Dieses Verfahren ist dadurch gekennzeichnet, daß vor dem Aufbringen des Wachses ein Führungselement in das komplementäre Führungselement des ersten Geschiebeteils eingesetzt wird. Nach dem Entfernen des Wachses von der Einbettmasse wird dieses Führungselement von der Einbettmasse an einer vorgegebenen Position der Negativform gehalten und mit einem Gußmaterial teilweise umgossen.

Der Vorteil der Erfindung liegt insbesondere darin, daß eines der Führungselemente lösbar an einem Geschiebeteil befestigt ist. Dadurch ist es möglich, im Falle einer Sitzlockerung zwischen den Geschiebeteilen infolge der normalen Gebißbelastung, z.B. durch den Kaudruck, die Friktion zwischen den Geschiebeteilen durch einfaches Auswechseln des lösbaren Führungselementes wieder herzustellen. Dabei ist eine Berücksichtigung der individuellen Situation z.B. durch die Bevorratung mehrerer, verschieden bemaßter Führungselemente, leicht möglich. Auf diese Art und Weise wird auch bei der Aktivierung des Geschiebes ein Reibschluß über die gesamte Länge des lösbare Führungselementes hergestellt, so daß die zeitlichen Intervalle zwischen den erforderlichen Aktivierungen gleichmäßig lang sind, da der relativ großflächiger Reibschluß bei gleicher Belastung deutlich langsamer verschleißt als ein punktförmiger Reibschluß.

Das Geschiebe ist besonders bevorzugt so ausgebildet, daß das lösbare Führungselement in einer Haltenut befestigbar ist. Dadurch läßt sich das Führungselement leicht in das entsprechende Geschiebeteil einsetzen und behält bei leichter Handhabbarkeit durch den Zahnarzt seine Position während des Einsetzens bei. Diese Haltenut für das lösbare Führungselement verläuft an dem betreffenden Geschiebeteil bevorzugt von okklusal nach zervikal, so daß eingeleitete Druck- bzw. Zug-Kräfte über die gesamte Länge der Haltenut übertragen werden können.

In einer besonders bevorzugten Ausführungsform weist die Haltenut einen Hinterschnitt auf, in welcher das lösbare Führungselement verankerbar ist. Durch diesen Hinterschnitt werden auch am zweiten Geschiebeteil auftretende Scherkräfte sicher in das Retentionselement eingeleitet, ohne daß das lösbare Führungselement und/oder das zweite Geschiebeteil in seiner Position verschoben wird.

Um eine gute Führung zwischen den Geschiebeteilen zu erzielen und um die auftretenden Kräfte im Geschiebe zuverlässig in das Retentionselement ableiten zu können, ragt das lösbare Führungselement mit einem freien Längswulst aus der Haltenut heraus. Das komplementäre Führungselement des benachbarten Geschiebeteils ist als Längsrille ausgebildet, in die der Längswulst des lösbaren Führungselements hereinragt.

Der Längswulst des lösbaren Führungselements ist besonders bevorzugt reibschlüssig in der Längsrille des komplementären Führungselements geführt. Durch diesen Reibschluß wird erreicht, daß nach okklusal wirkende Kräfte vom zweiten Geschiebeteil über das erste Geschiebeteil in das Retentionselement abgeleitet werden können ohne daß das zweite Geschiebeteil vom ersten Geschiebeteil abgezogen wird.

Das lösbare Führungselement ist besonders bevorzugt am zweiten Geschiebeteil angeordnet; dementsprechend ist das komplementäre Führungselement bevorzugt integral am ersten Geschiebeteil angeformt.

Der Vorteil des Herstellungsverfahrens liegt insbesondere darin, daß das Führungselement vor dem Anfertigen des Wachsmodelles in die richtige Position gebracht wird und dann im Verlauf des Verfahrens während der einzelnen Verfahrensschritte automatisch in der jeweils korrekten Position gehalten wird, so daß sich das lösbare Führungselement im fertigen Geschiebe automatisch an der richtigen Position befindet.

In einer besonders bevorzugten Ausführungsform des Verfahrens wird das bei der Herstellung der Geschiebeteile verwendete lösbare Führungselement nach der Fertigstellung der Geschiebeteile aus dem zweiten Geschiebeteil entfernt und durch ein austauschbares Führungselement insbesondere aus einem harten Kunststoff ersetzt. Diese Vorgehensweise gestattet die Verwendung eines an die besonderen Fertigungsbedingungen angepaßten, standardisierten Führungselementes, das z.B. den hohen Temperaturen beim Herausschmelzens des Wachses aus der Einbettmasse oder beim Ausgießen der Negativform mit Metall widersteht.

Vorteilhafte Weiterbildungen der Erfindung sind durch die Merkmale der Unteransprüche gekennzeichnet.

Im folgenden wird ein Ausführungsbeispiel der Erfindung anhand der Zeichnungen näher erläutert. Es zeigen:
- Fig. 1: eine geschnittene Seitenansicht eines erfindungsgemäßen Geschiebes;
- Fig. 2: eine Darstellung des Querschnitts entlang der Linie A-A in Figur 1;
- Fig. 3: eine Draufsicht auf das erste Geschiebeteil im Querschnitt;
- Fig. 4: eine Draufsicht auf das erste Geschiebeteil mit eingesetzten Führungselementen und einem umgebenden Wachsmodell zur Herstellung des Geschiebes im Querschnitt; und
- Fig. 5: eine Draufsicht auf die Negativform mit darin gehaltenen Führungselementen zur Herstellung des Geschiebes im Querschnitt.

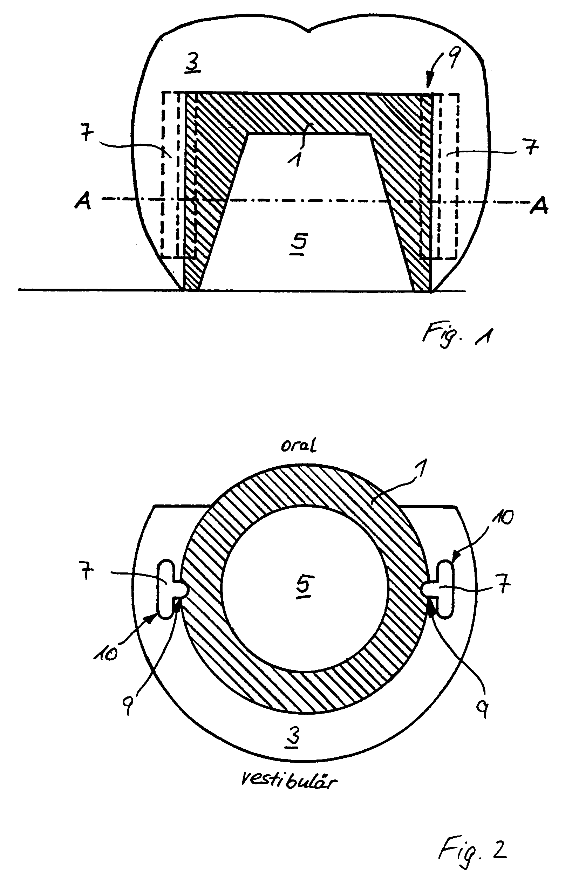

In Figur 1 ist eine geschnittene Seitenansicht eines Geschiebes dargestellt. Das Geschiebe ist auf einem Retentionselement 5, z.B. einem Zahnstumpf, angeordnet. Auf das Retentionselement 5 ist ein erstes Geschiebeteil 1 formschlüssig aufgesetzt. Dieses erste Geschiebeteil 1 wird von einem zweiten Geschiebeteil 3 umfaßt, welches gleichzeitig von der Prothese den nach außen sichtbaren Teil bildet. Die mechanische Verbindung zwischen dem ersten Geschiebeteil 1 und dem zweiten Geschiebeteil 3 wird durch Führungselemente 7, 9 verwirklicht, die approximal zwischen den Geschiebeteilen angeordnet sind und eine vorgegebene Länge von okklusal nach zervikal verlaufen. Das Führungselement 9 ist - in der dargestellten Ausführungsform - integral an dem ersten Geschiebeteil 1 angeformt. Das zweite Geschiebeteil 3 weist in der dargestellten Ausführungsform Haltenuten 10 (nicht dargestellt), in denen das Führungselement 7 lösbar befestigt ist. Durch eine geeignete Materialauswahl kann erreicht werden, daß der Verschleiß in dieser mechanischem Verbindung hauptsächlich am lösbaren Führungselement 7 auftritt, das im Bedarfsfall leicht im Austausch durch ein neues Führungselement 7 ersetzt werden kann.

Figur 2 zeigt einen Querschnitt entlang der Schnittlinie A-A in Figur 1 durch das Geschiebe. Im Zentrum befindet sich das Retentionselement 5, welches von dem ersten Geschiebeteil 1 vollständig umschlossen ist. Das erste Geschiebeteil 1 weist approximal Führungselemente 9 auf, in welche die im Querschnitt zum Beispiel T-förmig ausgebildeten Führungselemente 7 eingreifen. Die Haltenuten 10 im zweiten Geschiebeteil 3 weisen Hinterschnitte auf, in welchen das lösbare Führungselement 7 verankerbar ist. In diese Hinterschnitt der Haltenut 10 wird das Führungselement 7 mit dem Quersteg des "T" eingesetzt.

Da die Führungselemente 7, 9 und die Haltenut 10 so bemessen sind, daß es zu einem Reibschluß zwischen dem Führungselement 7 und dem im ersten Geschiebeteil 1 integral angeformten Führungselement 9 einerseits und dem Führungselement 7 und den im zweiten Geschiebeteil 3 vorhandenen Haltenuten 10 andererseits kommt, ergibt sich eine mechanisch feste, aber auch lösbare Verbindung zwischen den Geschiebeteilen 1, 3, wenn das zweite Geschiebeteil 3 auf das erste Geschiebeteil 1 aufgesetzt ist.

In der dargestellten Ausführung umfaßt das zweite Geschiebeteil 3 das erste Geschiebeteil 1 von vestibulär symmetrisch nach approximal, es bleibt jedoch oral ein vorgegebener Teil des ersten Geschiebeteiles unbedeckt.

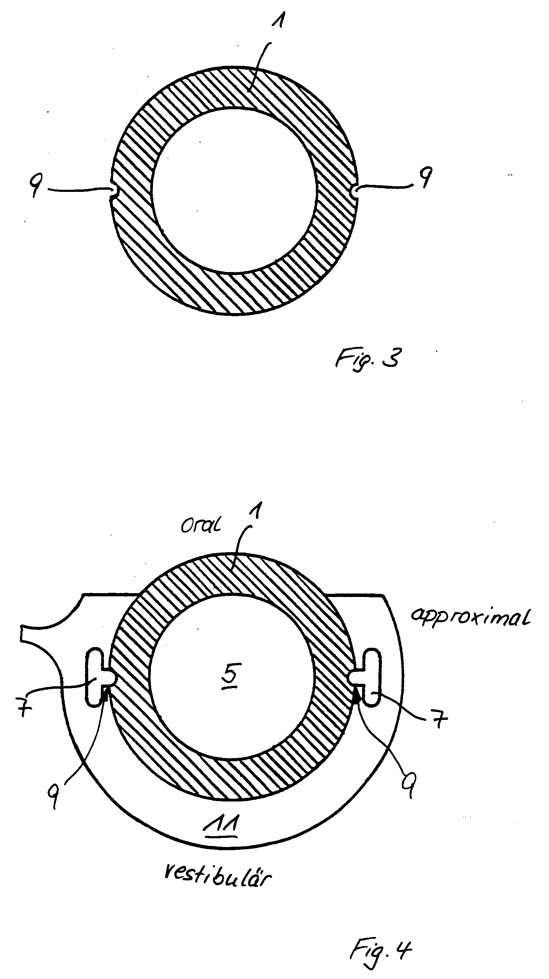

Figur 3 zeigt eine Draufsicht des ersten Geschiebeteiles 1 im Querschnitt. Das erste Geschiebeteil 1 hat in der dargestellten Ausführungsform einen im wesentlichen ringförmigen Querschnitt, der seitlich an einander gegenüberliegenden Stellen der äußeren Umfangsflächen Ausnehmungen 9 aufweist, welche die Führungselemente 9 sind komplementär zu den Führungselementen 7 welche lösbar in die Haltenuten 10 des zweiten Geschiebeteils 3 eingesetzt sind.

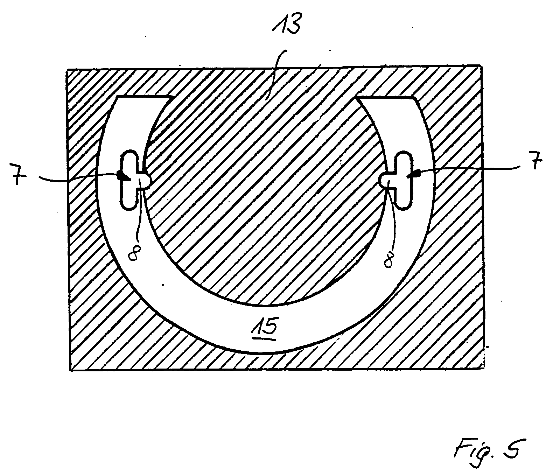

Die Figuren 4 und 5 betreffen ein Herstellungsverfahren für das in den Figuren 1 bis 3 dargestellte Geschiebe.

Figur 4 zeigt die Draufsicht auf einen Querschnitt des Geschiebes mit einem aus Wachs modellierten zweiten Geschiebeteil 11. Im Zentrum befindet sich das Retentionselement 5, welches von dem ersten Geschiebeteil 1 vollständig umschlossen ist. Dieses weist approximal außen Führungselemente 7, 9 auf, die an einander gegenüberliegenden Positionen angeordnet sind und ineinandergreifen. Das erste Geschiebeteil ist von vestibulär symmetrisch nach approximal beidseitig von dem Wachsmodell 11 eingefaßt, wobei in der dargestellten Ausführungsform oral ein vorgegebener Abschnitt des ersten Geschiebeteiles 1 freibleibt. Die Führungselemente 7, die z.B. aus Keramikmaterial bestehen, sind in das Wachsmodell 11 integriert.

Figur 5 zeigt im Querschnitt eine Draufsicht auf die aus der Einbettmasse gebildete Negativform 13. Diese Negativform 13 weist einen Hohlraum 15 auf, der dem Wachsmodell 11 des zweiten Geschiebeteiles entspricht. Dieser Hohlraum wird erzeugt, indem die Einbettmasse ausgehärtet wird, das Wachs erhitzt und so aus der Einbettmasse entfernt wird. Der Hohlraum 15 enthält die Führungselemente 7, die mit dem Abschnitt, mit dem sie in die komplementären Führungselemente 9 des ersten Geschiebeteils 1 eingreifen, in der Einbettmasse gehalten werden. Durch das Auffüllen der Negativform 13 mit einem Gußmaterial entsteht das zweite Geschiebeteil 3, in dem die Führungselemente 7 an der richtigen Position eingebettet sind. Wird die Negativform 13 entfernt, bleibt das zweite Geschiebeteil 3 zurück, aus dem die zum Eingriff in die komplementären Führungselemente 9 des ersten Geschiebeteils 1 vorgesehenen Abschnitte der Längswülste der Führungselemente 7 hervorragen.

Die während der Herstellung des Geschiebes verwendeten Führungselemente 7 bestehen bevorzugt aus einem keramischen Material. Nach Fertigstellung des zweiten Geschiebeteiles 3 werden diese dann bevorzugt durch austauschbare Führungselemente 7 aus einem anderen Material - bevorzugt aus einem harten Kunststoff - ersetzt. Dazu werden die keramischen Führungselemente 7 z.B. mittels Sandstrahl-Technik aus den Haltenuten 10 des zweiten Geschiebeteiles 3 entfernt, so daß dann die Führungselemente 7 aus dem bevorzugten Material in die Haltenuten 10 eingesetzt werden können.

## Patentansprüche

1. Geschiebe mit einem an einem Retentionselement befestigbaren ersten Geschiebeteil und einem darauf aufschiebbaren zweiten Geschiebeteil, mit von okklusal nach zervikal verlaufenden, ineinandergreifenden Führungselementen zwischen den Geschiebeteilen, dadurch gekennzeichnet, daß mindestens eines der Führungselemente (7, 9) an einem Geschiebeteil (1, 3) lösbar befestigt ist.

2. Geschiebe nach Anspruch 1,
dadurch gekennzeichnet, daß das lösbare Führungselement (7) in einer Haltenut (10) befestigbar ist.

3. Geschiebe nach Anspruch 2, dadurch gekennzeichnet, daß die Haltenut (10) für das lösbare Führungselement (7) an dem betreffenden Geschiebeteil (3) von okklusal nach zervikal verläuft.

4. Geschiebe nach Anspruch 3, dadurch gekennzeichnet, daß die Haltenut (10) einen Hinterschnitt aufweist, in welcher das lösbare Führungselement (7) verankerbar ist.

5. Geschiebe nach einem der vorstehenden Ansprüche, dadurch gekennzeichnet, daß das lösbare Führungselement (7) mit einem freien Längswulst aus der Haltenut (10) herausragt, und daß das komplementäre Führungselement (9) des benachbarten Geschiebeteils (1) als Längsrille ausgebildet ist, in die der Längswulst (8) des lösbaren Führungselements (7) hereinragt.

6. Geschiebe nach Anspruch 5, dadurch gekennzeichnet, daß der Längswulst des lösbaren Führungselements (7) reibschlüssig in der Längsrille des komplementären Führungselements (9) geführt ist.

7. Geschiebe nach einem der vorstehenden Ansprüche, dadurch gekennzeichnet, daß das lösbare Führungselement (7) am zweiten Geschiebeteil (3) angeordnet ist, und daß ein komplementäres Führungselement (9) integral am ersten Geschiebeteil (1) angeformt ist.

8. Geschiebe nach einem der vorstehenden Ansprüche, dadurch gekennzeichnet, daß weitere, einander entsprechende komplementäre Führungselemente (7, 9) integral am ersten und zweiten Geschiebeteil (1, 3) angeformt sind.

9. Geschiebe nach einem der vorstehenden Ansprüche, dadurch gekennzeichnet, daß das lösbare Führungselement (7) aus einem harten Kunststoff besteht.

10. Geschiebe nach einem der Ansprüche 1 bis 8, dadurch gekennzeichnet, daß das lösbare Führungselement (7) aus Metall oder Keramik besteht.

11. Geschiebe nach einem der vorstehenden Ansprüche, dadurch gekennzeichnet, daß Rastelemente an beiden Führungselementen (7, 9) vorhanden sind, welche bei einer vorgegebener Relativposition zwischen den Geschiebeteilen (1, 3) ineinandergreifen.

12. Verfahren zur Herstellung eines Geschiebes nach einem der vorstehenden Ansprüche, bei dem das zweite Geschiebeteil am ersten Geschiebeteil aus Wachs modelliert wird, das Wachsmodell abgenommen und mit Einbettmasse umgeben wird und nach dem Aushärten der Einbettmasse das Wachs entfernt und die entstandene Negativform mit Gußmaterial ausgegossen und anschließend entfernt wird, dadurch gekennzeichnet, daß vor dem Aufbringen des Wachses (11) ein Führungselement (7) in das komplementäre Führungselement (9) des ersten Geschiebeteils (1) eingesetzt wird, nach dem Entfernen des Wachses (11) von der Einbettmasse an einer vorgegebenen Position der Negativform (13) gehalten und mit einem Gußmaterial teilweise umgossen wird.

13. Verfahren nach Anspruch 12,
dadurch gekennzeichnet, daß das Führungselement (7) aus dem zweiten Geschiebeteil (3) entfernt und durch ein austauschbares Führungselement (7) ersetzt wird.

14. Verfahren nach Anspruch 13,
dadurch gekennzeichnet, daß das austauschbare Führungselement (7) aus einem anderen Material, insbesondere aus einem harten Kunststoff besteht.

15. Verfahren nach Anspruch 13,
dadurch gekennzeichnet, daß das Führungselement (7) aus dem zweiten Geschiebeteil (3) durch Sandstrahlen entfernt wird.
